# EUROPEAN PATENT APPLICATION

(11) **EP 2 650 784 A1**
(43) Date of publication of application: **16.10.2013**
(21) Application number: 11846154.0
(22) Date of filing: 05.12.2011
(51) Int. Cl.: G06F 9/445, G06F 13/00

(54) **CLIENT CONTROL METHOD AND CLIENT CONTROL SYSTEM**

(30) Priority: 07.12.2010 JP 2010272100
(71) Applicant: PSC, Inc., Matsuyama-shi, Ehime 790-0003 (JP)
(72) Inventor: AIBARA Teruo, Matsuyama-shi Ehime 790-0003 (JP)
(74) Representative: Zimmermann & Partner
(86) International application number: PCT/JP2011/078017
(87) International publication number: WO 2012/077616

(57) **Abstract**

To provide a client control method which can control a local application of a client in a web system without greatly lowering the security settings of a browser. [Solution] The present client control method is provided with: a step in which a script executing application is installed in a client (20) and this script executing application is set in association with a predetermined extension; a step in which a script file is stored in a region of a web server (15) that can be accessed from a web browser, said script file having the predetermined extension assigned thereto for performing predetermined batch processing in the client (20); a step in which the script file is downloaded to the client (20); and a step in which the script executing application associated with the predetermined extension is started in the client (20) and the batch processing described in the script file is executed.

## Description

### TECHNICAL FIELD

The present invention relates to a client control method in which, in the context of a system having server(s) and client(s), control of client(s) is carried out from server(s), and in particular relates to a client control method taking place in the context of a web system.

### BACKGROUND ART

Conventionally provided in the context of a client-server system when execution of a local application installed at a client (local PC) was to be controlled from a server are systems in which special-purpose application(s) for control of client(s) are installed at the server and at the respective clients.

However, where system architecture has involved installation of special-purpose application(s), due to the significant dependence on the operating system (OS) at the server and respective clients, and especially where different OSes are installed at the respective clients, this has tended to increase complexity of system constitution.

On the other hand, where attempts have been made to find a general-purpose solution which would not be OS-dependent, systems have been provided, e.g., as disclosed at Patent Reference Nos. 1 through 3, below, in which, in the context of a web system employing a web browser, execution of an application at a client is controlled by way of a browser. Furthermore, if browser security settings are significantly lowered, it is possible to utilize an ActiveX (registered trademark) or Java (registered trademark) script to control execution of a local application outside the control of the browser.

### PRIOR ART REFERENCES

### PATENT REFERENCES

Patent Reference No. 1: Japanese Patent Application Publication Kokai No. 2001-142828
Patent Reference No. 2: Japanese Patent Application Publication Kokai No. 2005-323093
Patent Reference No. 3: Japanese Patent Application Publication Kokai No. 2009-163732

### SUMMARY OF INVENTION

### PROBLEM TO BE SOLVED BY INVENTION

However, because a client control method that utilizes a web browser must directly control local application(s) which are part of the OS from the browser, implementation thereof will be impossible unless, as explained above, browser security settings are lowered significantly.

While such a method might be practical in the context of a system comprising only a closed local network, it would be dangerous to significantly lower browser security settings at a system capable of connecting to the external internet.

The present invention was conceived in light of such problems, it being an object thereof to provide a client control method and client control system capable of controlling a local application at a client in a web system without significantly lowering browser security settings.

### MEANS FOR SOLVING PROBLEM

To solve the foregoing problem, a client control method associated with the present invention, in the context of a web system equipped with a web server and a client connected by way of a network, is a client control method in which execution of an application at the client is controlled from the web server, and is characterized in that it comprises client setting configuration steps taking place at the client and including a step in which a script execution application is installed, and a step in which settings are configured such that this script execution application is associated with a specific extension; a script file storage step in which a script file, which has the specific extension and which is for causing prescribed batch processing to be carried out at the client, is stored at a region, capable of being accessed from a web browser at the client, at a storage device at the web server; a download step in which the script file is downloaded from the web server to the client by way of a web browser at the client; and a batch processing execution step taking place at the client and such that, when the script file is opened, the script execution application associated with the specific extension is launched, and the batch processing described at the script file is executed.

Furthermore, a client control system associated with the present invention comprises a web server and a client connected by way of a network and permitting execution of an application at the client to be controlled from the web server, the client control system being characterized in that the client comprises a storage device that stores a web browser, a script execution application, and an association between the script execution application and a specific extension; the web server comprises a storage device that stores, at a region capable of being accessed from a web browser at the client, a script file which has the specific extension and which is for causing prescribed batch processing to be carried out at the client; and the client has functionality such that downloading of the script file from the web server and opening thereof causes the script execution application which is associated with the specific extension to be launched, and causes the batch processing described at the script file to be executed.

### BENEFIT OF THE INVENTION

In accordance with the present invention, by installing a script execution application at a client, configuring settings at the client so that the script execution application is associated with a specific extension, and using a web browser at the client to cause a script file to be downloaded from a web server, it is possible to cause prescribed batch processing to be carried out at the client without significantly lowering browser security settings.

Moreover, in accordance with the present invention, by causing data input at a browser of a client to be sent to a web server, and causing a script file containing this data to be created at the web server, it is possible to cause the data from the browser to be passed indirectly to a local application at the client without significantly lowering the security of the browser.

### BRIEF DESCRIPTION OF DRAWINGS

[FIG. 1] FIG. 1 is a schematic diagram showing in simplified fashion the constitution of a client control system associated with an embodiment.
[FIG. 2] FIG. 2 is a schematic diagram showing in simplified fashion the constitution of a PC workstation associated with an embodiment.
[FIG. 3] FIG. 3 is a schematic diagram showing in simplified fashion the constitution of a web server associated with an embodiment.
[FIG. 4] FIG. 4 is a schematic diagram showing in simplified fashion the constitution of a client associated with an embodiment.
[FIG. 5] FIG. 5 is a flowchart showing flow of processing in a client control method associated with an embodiment.
[FIG. 6] FIG. 6 is a flowchart showing flow of processing in a client control method associated with a first variation on an embodiment.

### EMBODIMENTS FOR CARRYING OUT THE INVENTION

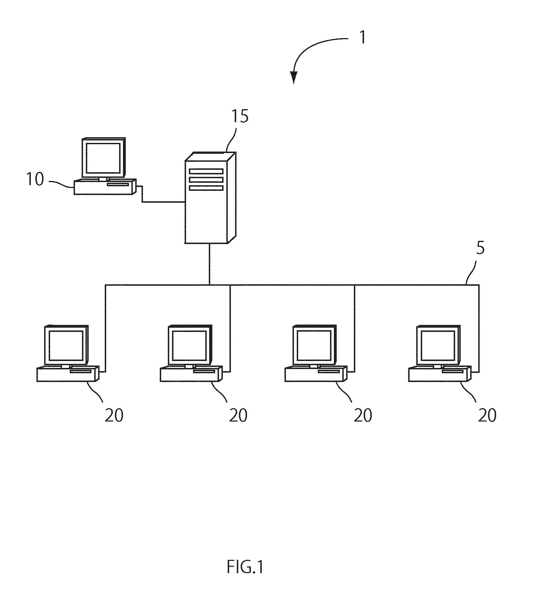

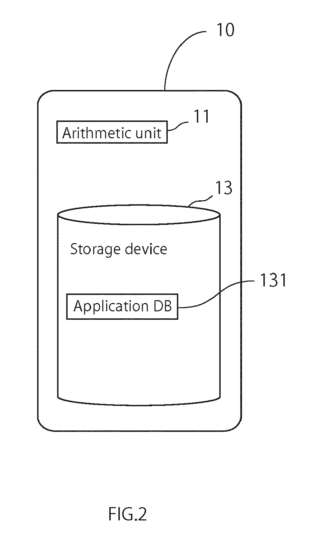

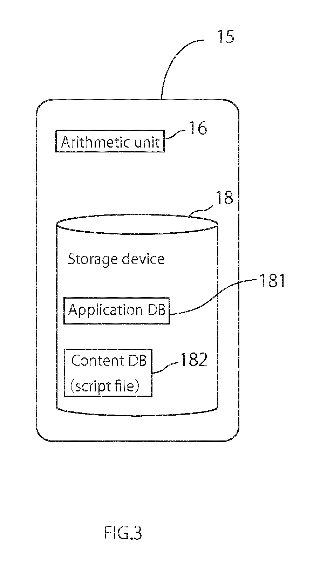

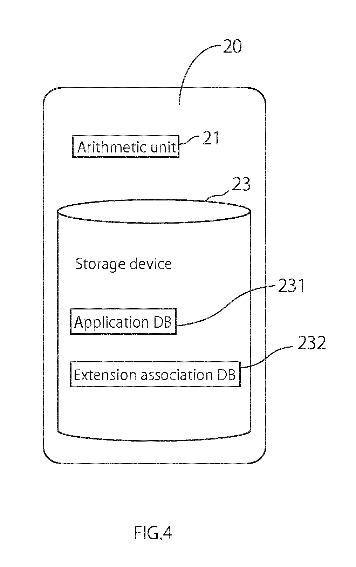

Client control methods which are embodiments of the present invention will be described in detail below with reference to the drawings. FIG. 1 is a schematic diagram showing in simplified fashion the constitution of a client control method associated with the present embodiment. FIG. 2 is a schematic diagram showing in simplified fashion the constitution of a PC workstation associated with the present embodiment; FIG. 3 is a schematic diagram showing in simplified fashion the constitution of a web server associated with the present embodiment; and FIG. 4 is a schematic diagram showing in simplified fashion the constitution of a client associated with the present embodiment.

As shown in FIG. 1, client control system 1 associated with the present embodiment is equipped with personal computer (PC) workstation 10, web server 15, and plurality of clients 20, these being mutually connected by way of local area network (LAN) 5.

Client control system 1 is characterized in that it is constituted such that a script file for causing prescribed batch processing to be carried out at client(s) 20 is created at PC workstation 10 and is uploaded to web server 15, and such that execution of this script file at a client 20 that has downloaded the script file by way of a web browser, which is an application for viewing web content, causes prescribed batch processing to be carried out at client 20.

As shown in FIG. 2, PC workstation 10, which is a PC for creating a file that is uploaded to web server 15, is equipped with a central processing unit(s) (CPU) or other such arithmetic unit(s) 11 for carrying out various types of operations, as well as hard disc drive(s) (HDD), random access memory or memories (RAM), and/or other such storage device(s) 13 for storing various types of information. Storage device 13 is equipped with application DB 131 at which various applications for executing prescribed processing at PC workstation 10 are stored.

In the present embodiment, PC workstation 10 has functionality for creating script file(s) for causing prescribed batch processing to be carried out at a plurality of clients 20, script creation application(s) being stored at application DB 131.

A specific extension (e.g., "spc") which serves as identifier to identify that a file is a prescribed script file is attached to filenames of script files created by such script creation application(s). While this specific extension may be chosen arbitrarily, it is preferred that it be chosen so as to be a unique specific extension that does not coincide with existing extensions associated with existing applications.

Web server 15 has functionality for providing content data to web browsers at a plurality of clients 20, being equipped, as shown in FIG. 3, with arithmetic unit(s) 16 for carrying out various types of operations, and with storage device(s) 18 for storing various types of information.

Storage device 18 is equipped with application DB 181 at which various applications for executing prescribed processing at web server 15 are stored, and with content DB 182 at which web content data is stored. Note that settings are configured such that content DB 182 is a region at storage device 18 that is capable of being accessed from LAN 5, and the aforesaid script file is stored at content DB 182.

Client 20 is a local PC which has functionality for accessing web server 15 and viewing web content, and which has functionality for executing script file(s) created by PC workstation 10, being equipped, as shown in FIG. 4, with arithmetic unit(s) 21 for carrying out various types of operations, and with storage device(s) 23 for storing various types of information.

Storage device 23 is equipped with application DB 231 at which various local applications for executing prescribed processing at client 20 are stored, and with extension association DB 232 at which associations between file extensions and local applications are recorded.

In the present embodiment, web browser application(s) for viewing web content, and script execution application(s) for executing script file(s) having the aforementioned specific extension, are stored at application DB 231. Associations between extension(s) specifying script files and script execution application(s) are recorded at extension association DB 232 as associations authorizing which application should be used for operations thereon.

Moreover, in the present embodiment, it is preferred that settings be configured so as to cause a script execution application to be launched automatically, without opening a dialog to request authorization for launch thereof, when a file having a specific extension is downloaded by way of a web browser.

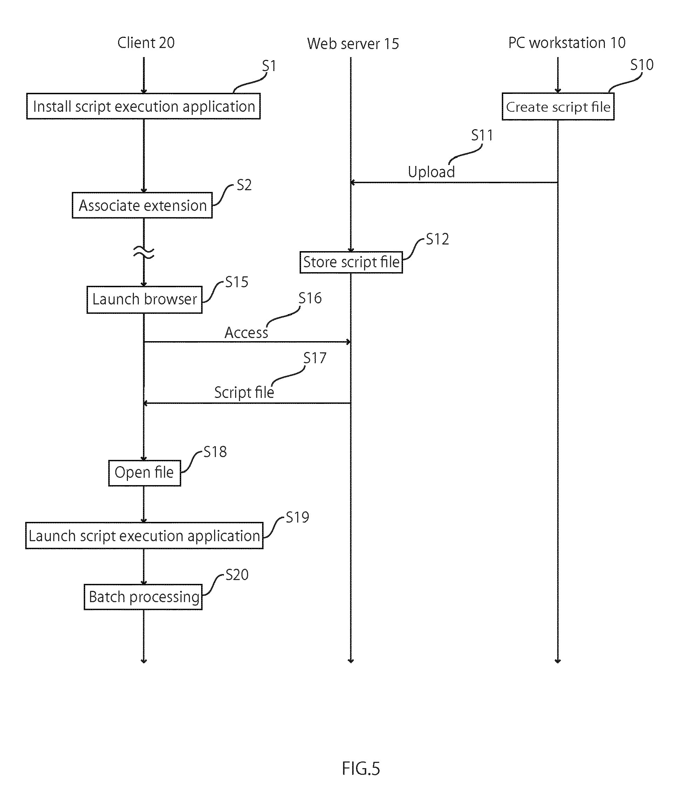

Constitution of client control system 1 having been described above, description of flow of processing in accordance with a client control method that might take place in the context of the present system is next given with reference to FIG. 5. Note that processing respectively occurring at PC workstation 10, web server 15, and client 20 may be implemented as a result of execution by respective arithmetic units 11, 16, and 21 of various applications stored at respective application DBs 131, 181, and 231.

In the present embodiment, at S1, script execution application(s) for opening and executing script file(s) having specific extension(s) must first be installed in advance at respective clients 20.

Moreover, in the present embodiment, settings must be configured so that specific extension(s) are associated with script execution application(s) at respective clients 20 where script execution application(s) are installed (S2). Association of extension(s) thus results in a situation in which opening of a script file at any of respective clients 20 results in execution of the script execution application which is associated with that extension.

Such configuration of settings at respective clients 20 according to S1 and S2 might be done only once for each client 20; and in the event that there are newly added client(s) 20, configuration of settings according to S1 and S2 may be carried out for the additional client(s) 20.

Next, when a server administrator at client control system 1 wishes to carry out prescribed batch processing at respective clients 20, the administrator, at S10, launches a script execution file at PC workstation 10 and creates a script file describing the prescribed batch processing (S10).

Next, at PC workstation 10, when the server administrator indicates that the script file that has been created is to be uploaded, the script file is, at S11, sent from PC workstation 10 to web server 15 by way of LAN 5. Upon receiving the script file, web server 15, at S12, stores the script file in content DB 182. As described above, this content DB 182 is capable of being accessed from client 20 by way of LAN 5.

Preparations at web server 15 having been completed at S12, operations are next carried out at client 20. A client administrator at client 20 launches a web browser application at a client 20 at which it is desired that batch processing be carried out (S15), and the client 20 is made to access the aforesaid script file by way of the browser (S16).

In addition, when the client administrator selects the script file with the browser, the script file is, at S 17, downloaded from the web server 15 to the client 20 by way of the browser and is stored at storage device 23. In the present embodiment, note that it is preferred that browser settings be configured in advance so as to cause download of the selected script file to begin automatically, without display of a dialog to request authorization for download thereof.

Next, at client 20, when the script file is opened (S18), arithmetic unit 21 refers to extension association DB 232 to ascertain which application (script execution application) is associated with the script file extension, and also launches the script execution application which is stored at application DB 231.

In addition, after the script execution application has been launched, the prescribed batch processing which is described at the script file is carried out by the script execution application. As batch processing, processing comprising execution of local application A stored at application DB 231 might, for example, be carried out.

As described above, in contrast to the conventional situation in which control of execution of an application at a client could only be carried out from a server using a method in which an ActiveX (registered trademark) or Java (registered trademark) script was employed under conditions of significantly lowered web browser security, which presented problems in terms of security, or a method in which special-purpose application(s) for control of a client had to be installed at both the server and the client, which was problematic because it was not a general-purpose solution, the present embodiment permits client control to be carried out with almost no lowering of security while using a general-purpose web browser.

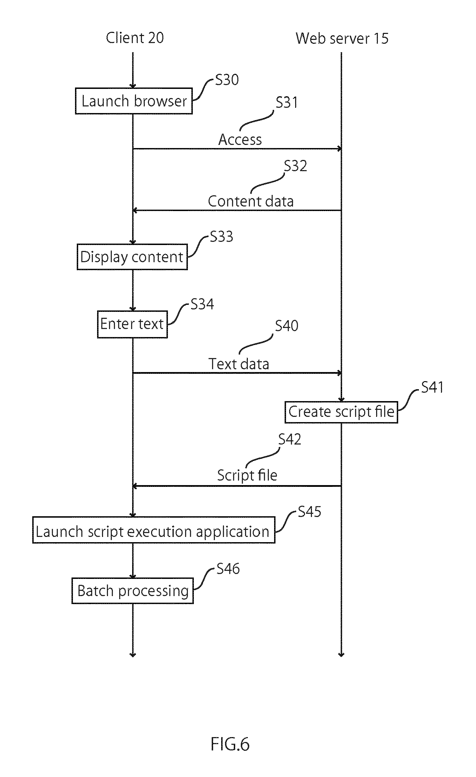

Next, description of a first variation on processing in accordance with a client control method is given with reference to FIG. 6. Whereas batch processing involving execution only of a local application at client 20 was described in the foregoing embodiment, batch processing in which data input by way of a web browser at client 20 is passed to another local application at client 20 will be described in the first variation.

More specifically, description will be carried out in terms of an example in which text data input by way of a web browser is passed via web server 15 to local application X at client 20, local application X being an application which counts the number of strokes used to write a character, and local application X is made to count the number of strokes used to write a character.

In the present first variation, note that it is assumed that the aforementioned configuration of settings at client 20 according to S1 and S2 has already been completed. Furthermore, in the present first variation, a script creation application which automatically creates script file(s) in cooperation with the web browser of client 20 is installed at web server 15, script file(s) being automatically created at web server 15.

First, at S30, a client administrator launches a web browser at client 20, which is then used to access a prescribed web page provided by web server 15 (S31). At S32, content data stored at content DB 182 of web server 15 is sent to the client 20 from which access was made, and at S33, the prescribed web page is displayed at the display of client 20.

The content of this web page includes a text entry field and an ENTER button (OKAY button), the page being constituted such that clicking of the ENTER button by the client administrator following entry of characters within the text entry field causes the text data that has been entered to be sent to web server 15.

At S34, if the client administrator enters the Japanese characters for "patent" and clicks the ENTER button, this text data, at S40, will be sent to web server 15. Upon receiving the text data, web server 15 automatically creates a script file for causing local application X at client 20 to count the total number of strokes used to write these Japanese characters for "patent" (S41), and at S42, sends this to client 20.

Upon receiving the script file, client 20 automatically opens the script file, launches the script execution application associated with the specific extension of the script file (S45), and executes the batch processing described by the script file (S46). More specifically, client 20 carries out batch processing comprising launching local application X; passing the text data, i.e., the Japanese characters for "patent", to local application X; and causing the total number of strokes used to write the characters to be counted.

Of course, it being possible for the batch processing which is described by the script file to be varied as appropriate, it is also possible to, in addition to the foregoing processing, cause a local application Y for recording the characters and the number of strokes which have been counted to be launched so that this data can be recorded.

Furthermore, whereas in the present first variation processing causing data input at a web browser at client 20 to be passed to another local application at client 20 by way of web server 15 was carried out, the constitution may also be such that processing causing data stored at web server 15 to be passed to client 20, and/or processing causing data at client 20 to be sent to web server 15, where it is subjected to data processing by an application at web server 15, after which the processed data is passed to client 20, is carried out.

As described above, with almost no lowering of browser security, the present first variation makes it possible for data input at a web browser at client 20 to be passed in real time to a local application at client 20 by way of web server 15, and makes it possible for execution to be carried out at client 20 by a local application outside of the control of the web browser.

Conventionally (with an ActiveX (registered trademark) or Java (registered trademark) script), to pass data input at a browser to another local application which was at the same PC but which was separate from the browser, it had been necessary to significantly lower the security of the browser.

In contradistinction hereto, by not passing data directly from a browser to a local application but by instead using a script file to cause data input at a browser to be indirectly passed to a local application by way of a web server 15 as in the present first variation, it is possible to cause data input at a browser to be passed to a local application without lowering the security of the browser.

While embodiments of the present invention including variations thereof have been described above, modes of carrying out the present invention are not limited to the foregoing embodiments, a great many further variations being possible without departing from the gist of the present invention. For example, whereas the foregoing embodiments were described in terms of a situation in which a PC workstation and a web server were discrete entities, the web server may be constituted such that it is integrated therewith, and/or the web server functionality may be implemented in distributed fashion across a plurality of PCs.

Moreover, to further improve system security, the constitution might be such that a code which indicates that a file is a legitimate script file is embedded within the script file by the script file creation application during script file creation, and the script file execution application might be imparted with functionality for analyzing the aforesaid code within script files. By causing the client to open and execute only those script files in which the aforesaid code is embedded, it will be possible to avoid dangerous situations that might otherwise arise due to fraudulent script files.

Moreover, to further increase security, a constitution might be adopted in which script files are stored in a state in which they have been encrypted with an encryption key, and a public key is used at the client for decoding thereof.

### EXPLANATION OF REFERENCE NUMERALS

- 1: Client control system
- 5: LAN
- 10: PC workstation
- 11: Arithmetic unit
- 13: Storage device
- 131: Application DB
- 15: Web server
- 16: Arithmetic unit
- 18: Storage device
- 181: Application DB
- 182: Content DB
- 20: Client
- 21: Arithmetic unit
- 23: Storage device
- 231: Application DB
- 232: Extension association DB

## Claims

1. A client control method in which, in the context of a web system equipped with a web server and a client connected by way of a network, execution of an application at the client is controlled from the web server, the client control method being **characterized in that** it comprises:
client setting configuration steps taking place at the client and including a step in which a script execution application is installed, and a step in which settings are configured such that this script execution application is associated with a specific extension;
a script file storage step in which a script file, which has the specific extension and which is for causing prescribed batch processing to be carried out at the client, is stored at a region, capable of being accessed from a web browser at the client, at a storage device at the web server;
a download step in which the script file is downloaded from the web server to the client by way of the web browser at the client; and
a batch processing execution step taking place at the client and such that, when the script file is opened, the script execution application associated with the specific extension is launched, and the batch processing described at the script file is executed.

2. The client control method according to claim 1 **characterized in that** it further comprises a script file creation step in which the script file is created at the web server in such fashion as to contain data from the web server;
wherein the batch processing execution step causes the data from the web server that is contained in the script file to be passed to a local application at the client.

3. The client control method according to claim 2 **characterized in that** it further comprises a data transmission step in which the data input by way of the web browser at the client is sent to the web server;
wherein the script file creation step is a step in which the data received at the data transmission step is used as the data from the server for creation of the script file.

4. A client control system comprising a web server and a client connected by way of a network and permitting execution of an application at the client to be controlled from the web server, the client control system being **characterized in that**:
the client comprises a storage device that stores a web browser, a script execution application, and an association between the script execution application and a specific extension;
the web server comprises a storage device that stores, at a region capable of being accessed from the web browser at the client, a script file which has the specific extension and which is for causing prescribed batch processing to be carried out at the client; and
the client has functionality such that downloading of the script file from the web server and opening thereof causes the script execution application which is associated with the specific extension to be launched, and causes the batch processing described at the script file to be executed.

5. The client control system according to claim 4 **characterized in that** the storage device at the web server further comprises a script file creation application that causes the script file to be created in such fashion as to contain data from the web server;
wherein execution of the batch processing by the client causes the data from the web server to be passed to a local application at the client.

6. The client control system according to claim 5 **characterized in that** the storage device at the web server stores web content having functionality for causing data input by way of a web browser at the client to be sent to the web server, and the data from the web server is the data which has been sent from the client.
